(19) Europäisches Patentamt
European Patent Office
Office européen des brevets

(11) **EP 1 909 168 A2**

(12) **EUROPEAN PATENT APPLICATION**

(43) Date of publication:
**09.04.2008 Bulletin 2008/15**

(51) Int Cl.:
***G06F 3/06*** *(2006.01)*

(21) Application number: **07253385.4**

(22) Date of filing: **28.08.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | • **HITACHI COMPUTER PERIPHERALS CO., LTD.**<br>**Ashigarakami-gun,**<br>**Kanagawa-ken (JP)** |
| (30) Priority: **26.09.2006 JP 2006261246** | (72) Inventor: **Tashiro, Naomitsu,**<br>**c/o Hitachi, Ltd.,**<br>**Intellectual property Group**<br>**Chiyoda-ku**<br>**Tokyo 100-8220 (JP)** |
| (71) Applicants:<br>• **Hitachi, Ltd.**<br>**Chiyoda-ku**<br>**Tokyo 100-8280 (JP)** | (74) Representative: **Hodsdon, Stephen James et al**<br>**Mewburn Ellis LLP**<br>**York House**<br>**23 Kingsway**<br>**London WC2B 6HP (GB)** |

(54) **Storage apparatus, storage system, and data read method**

(57)     An object of the invention is to prevent command response timeout occurring until the virtual disk library apparatus starts data transfer to a host computer, and to reduce the cache capacity provided in the virtual disk library apparatus.

The invention provides a storage apparatus (3) including a first storage device (6A) for storing and reading data and a second storage device (7) having a lower data read speed than that of the first storage device, wherein the first storage device maintains a head portion of data and transmits the maintained data to a host computer (2), and the second storage device maintains the entire data and transmits data subsequent to its head portion to the host computer.

**FIG.1**

VIRTUAL DISK LIBRARY APPARATUS

**Description**

This application relates to and claims priority from Japanese Patent Application No. 2006-261246, filed on September 26, 2006, the entire disclosure of which is incorporated herein by reference.

The invention relates to a storage apparatus, storage system, and data read method, particularly to those suitable for use in a virtual disk library apparatus in which a magnetic tape is virtualized as a magnetic disk device, and also a data transfer method for the virtual disk library apparatus.

Generally, a computer system is connected to a large-volume magnetic disk device, and an archive/backup system connected to a storage device for archiving/backing up data stored in the magnetic disk device is formed. The archive/backup storage device uses large-volume magnetic tapes with an inexpensive cost per bit, and predetermined data is archived and backed up to a magnetic tape at predetermined times. In recent computer systems, a virtual disk library apparatus, in which a large-volume magnetic disk device with an inexpensive cost per bit is achieved by using the above mentioned magnetic tape device as a storage device and virtually forming a magnetic disk device, is used in practice.

In the virtual disk library apparatus, data is recorded on a magnetic tape in a tape library device. Therefore it is necessary, when reading data recorded on the magnetic tape, to move the magnetic tape the data has been recorded on from a tape slot to a tape drive, and then set the magnetic tape to the position where required data has been recorded. It takes between 30 seconds and 5 minutes for actual processing in a common tape library apparatus. Meanwhile, a host computer recognizes a virtual disk library apparatus as a magnetic disk device, so the command response timeout time set for a data read request from a host computer to a magnetic disk device is about several dozen seconds to one minute. For that reason, in some cases the virtual disk library apparatus cannot transfer data to the host computer within the command response timeout time in response to a data read request from the host computer.

Conventionally, command response timeout occurring while waiting for data transfer started by the virtual disk library apparatus is prevented by providing some operations to a host computer, e.g., installing dedicated software to the host computer, and various techniques relating to that have been proposed (see Japanese Patent Laid-Open Publication No. 11-242570).

However, the method proposed in Japanese Patent Laid-Open Publication No. 11-242570 cannot be used for a host computer that does not have a command response timeout prevention means, and the operation provided to the host computer also affects magnetic disk devices other than the virtual disk library apparatus, which has caused problems in that method.

This invention has been made in light of the above described problems, and an object is to provide a storage apparatus, storage system, and data read method for preventing command response timeout occurring in a host computer while waiting for data transfer started by a virtual disk library apparatus, without causing the above problems.

To preferably achieve the above-stated object, an aspect of the invention provides a storage apparatus including: a first storage device for storing and reading data; and a second storage device having a lower data read speed than that in the first storage device, wherein the first storage device stores a head portion of data and sends the stored data to a host system, and the second storage device maintains the entire data and sends the data subsequent to its head portion to the host system.

As a result, with that storage apparatus, command response timeout occurring in the host computer while waiting for data transfer started by the virtual disk library apparatus can be effectively reduced or prevented.

Another aspect of the invention provides a storage system including: a first storage device for storing and reading data; and a second storage device having a lower data read speed than that of the first storage device, wherein the first storage device has means for maintaining a head portion of data and sending the maintained data to a host system, and the second storage device has means for maintaining the entire data and sending the data subsequent to its head portion.

As a result, in that storage system, command response timeout occurring in the host computer while waiting for data transfer started by the virtual disk library apparatus can be effectively reduced or prevented.

Another aspect of the invention provides a data read method for a storage apparatus that reads data in response to a data output request given from a host computer, the storage apparatus including a first storage device for storing and reading data and a second storage device having a lower data read speed than that of the first storage device, the method including: a first step for maintaining a head portion of data and sending the maintained data to a host system under the control of the first storage device; and a second step for maintaining the entire data and sending the data subsequent to its head portion to the host system under the control of the second storage device.

As a result, that data read method can effectively reduce or prevent command response timeout occurring in the host computer while waiting for data transfer started by the virtual disk library apparatus.

According to aspects of the invention, command response timeout occurring until data transfer from a virtual disk library apparatus to a host computer is started can be effectively reduced or prevented.

**Brief Description of the Drawings**

Fig. 1 is a diagram illustrating a system configuration of an archive/backup system according to an embodiment of the invention.

Fig. 2 is a diagram illustrating access frequency and data access speed according to an embodiment.

Fig. 3 is a diagram illustrating one of various tables.

Fig. 4 is a diagram illustrating one of various tables.

Fig. 5 is a diagram illustrating one of various tables.

Fig. 6 is a flowchart showing a sequence in a processing procedure in the archive/backup system.

Fig. 7 is a flowchart showing a sequence in a processing procedure in the archive/backup system.

Fig. 8 is a flowchart showing a sequence in a processing procedure in the archive/backup system.

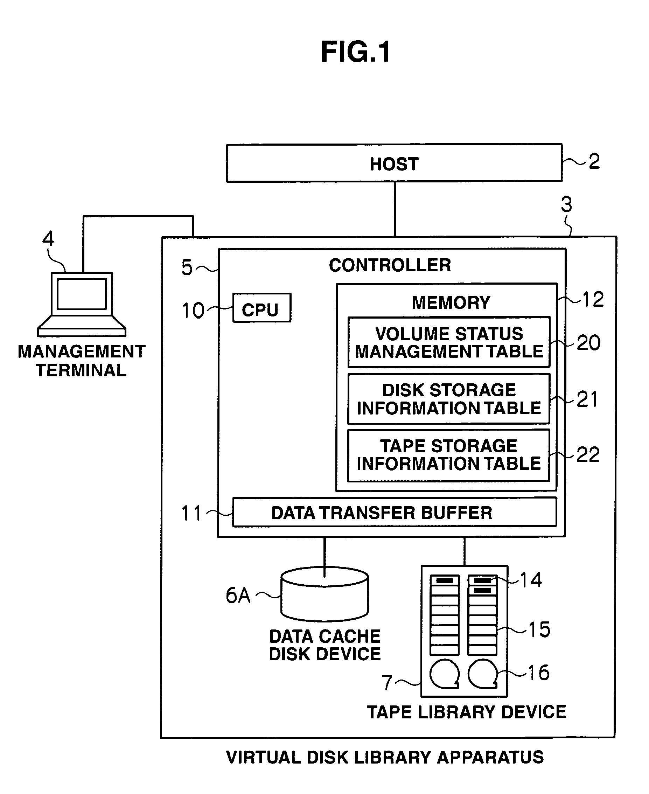

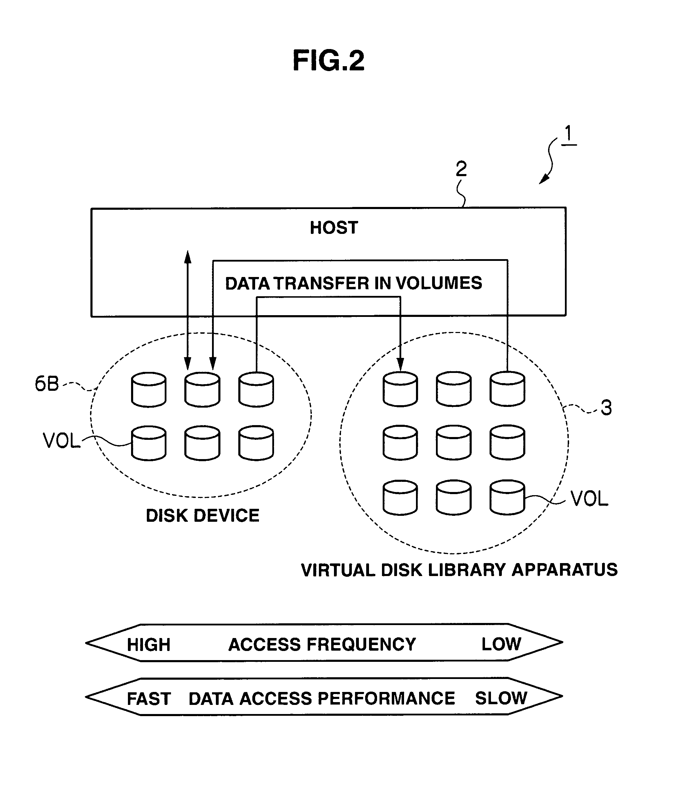

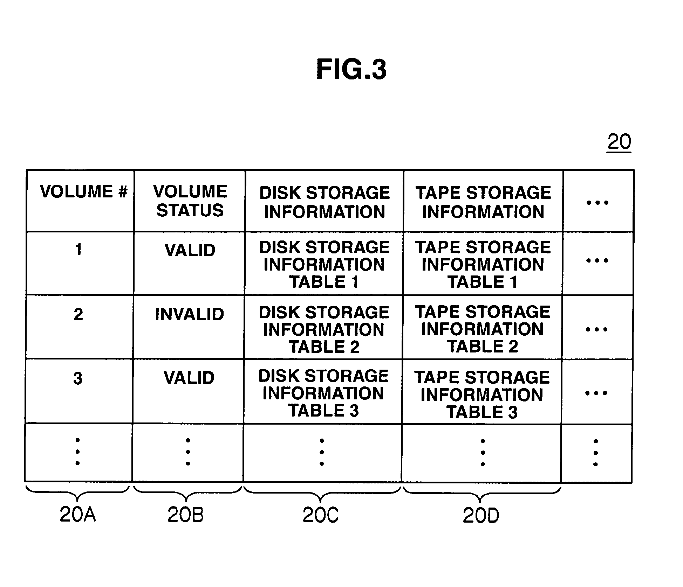

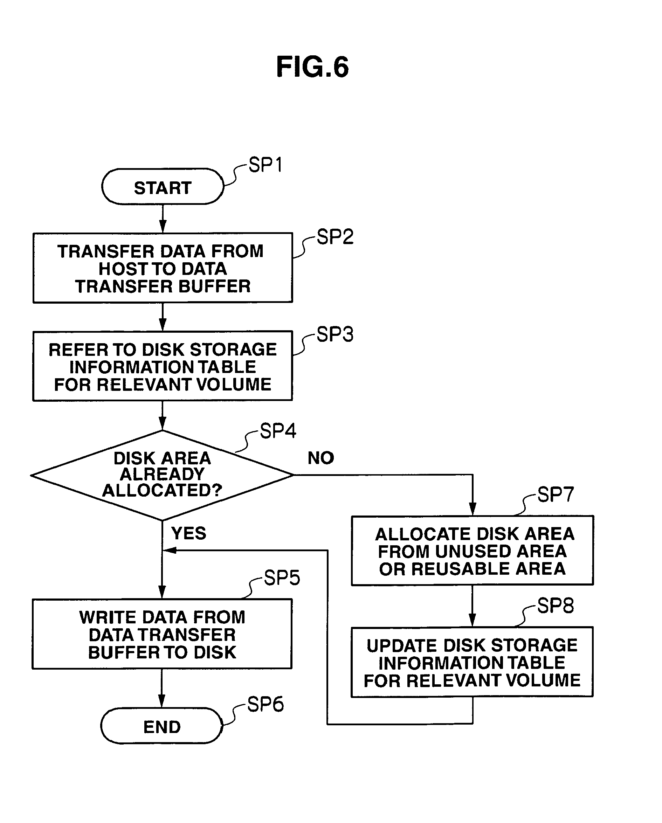

An embodiment of the invention will be described in detail with reference to the drawings. Fig. 1 is a diagram illustrating the archive/backup system configuration according to the embodiment of the invention, Fig. 2 is a diagram illustrating access frequency and data access speed in the archive/backup system according to the embodiment, Figs. 3-5 are diagrams illustrating various tables, and Figs. 6-8 show sequences in processing procedures in the archive/ backup system.

(1) Configuration of Archive/Backup System according to the Embodiment

As show in Fig. 1, an archive/backup system 1 according to the embodiment includes a host computer 2 for processing data, a virtual disk library apparatus 3 that stores data from the host computer 2, and a management terminal 4.

The host computer 2 is a computer device having information processing resources such as a CPU (Central Processing Unit) and memory, which are not shown in the figure, and examples of the host computer 2 include a personal computer, workstation, and mainframe. The host computer 2 has information input devices (not shown) such as a keyboard, switch, pointing device, and microphone, and information output devices (not shown) such as a monitor display and speaker.

The CPU is a processor that governs operational control for the overall host computer 2. Memory is used for storing application program used during user operation, and also used as work memory for the CPU. Various types of processing relating to operations performed by the entire host computer 2 are executed by the CPU executing the application program stored in the memory.

For example, as shown in Fig.2, the host computer 2 transfers data in units of logical volumes VOL, which will be described later, between an external magnetic disk device 6B and a virtual disk library apparatus 3 (described later), each having a different data access speed, according to the frequency of access to archive/backup data recorded in the virtual disk library apparatus 3, data type, or importance of data i.e., data priority. The host computer 2 can transfer data according to data importance even if the archive/backup data has not been recorded in units of logical volumes VOL, or even if the head portion of the archive/backup data in the logical volume VOL is not transferred to the external magnetic disk device 6B.

The virtual disk library apparatus 3 includes a magnetic disk device 6A and tape library device 7 that provide storage areas for storing data, and a controller (transfer controller) 5 for controlling data input/output to/from those devices. The virtual disk library apparatus 3 is used mainly for inexpensively maintaining a large volume of data that is not frequently accessed any more in a hierarchical storage system. The host computer 2 that manages the hierarchical storage system achieves inexpensive storage of a large volume of data by transferring data in units of logical volumes VOL between the magnetic disk devices with different data access performance according to data access frequency or necessity.

The tape library device 7 is designed to record archive/backup data, and includes n (n being a natural number) magnetic tape(s) 14, a tape slot 15 for holding the magnetic tape(s) 14, and a tape drive 16 for reading/writing data recorded on the magnetic tape(s) 14.

The magnetic disk device 6A includes disk devices (not shown). The disk devices are expensive disk drives such as SCSI (Small Computer System Interface) disks, or inexpensive disk drives such as SATA (Serial AT Attachment) disks or optical disks.

The tape library device 7 and the magnetic disk device 6A are operated by the controller 5. One or more logical volume(s) (VOL) are configured by a physical storage area provided by one or more disk device(s) or magnetic tape(s). Data from the host computer 2 is stored in blocks of a predetermined size (hereinafter referred to as a "logical blocks") in the logical volumes VOL.

A specific identification number is provided to each logical device. In this embodiment, data is input/output by specifying an address, which is a combination of the identification number and a specific number provided to each logical block (hereinafter referred to as an "LBA" (Logical Block Address)).

The controller 5 includes a CPU (Central Processing Unit) 10, memory 12, and buffer 11 as shown in Fig. 1, and also, a first transfer unit, second transfer unit, timer, and calculator that are not shown in Fig. 1. The memory 12 is used for storing and maintaining various control programs and tables, and also used as work memory for the CPU 10.

A volume status management table 20, disk storage information table 21, and tape storage information table 22, which will be described later, are also stored and maintained in the memory 12. The controller 5 executes various types of processing by having the CPU 10 execute the control programs stored in the memory 12. Each of the first and second transfer units, delay processor, timer, and calculator (not shown) includes an IC (Integrated Circuit), CPU, ROM (Read Only Memory), and RAM (Random Access Memory), etc.

The buffer 11 is designed to maintain arbitrary data. The arbitrary data may be the data identical to archive/backup data, or data different from archive/backup data, such as data used for buffering. The magnetic disk device 6A is used for temporarily caching data, and has a higher data access speed, if accessed from the controller 5, than that of the tape library device 7.

The controller 5 transfers archive/backup data recorded on the tape library device 7 to the buffer 11, and also transfers archive/backup data held by the buffer 11 to the host computer 2. The first transfer unit (not shown) is used for transferring data from the tape library device 7 or magnetic disk device 6A to the buffer 11, and the second transfer unit is used for transferring data from the buffer 11 to the host computer 2. In other words, the controller 5 can transfer data bidirectionally between the tape library device 7 or magnetic disk device 6A and the host computer 2. The first and second transfer units may transfer data at the same time, or either the first or second transfer unit may transfer data after the other transfers the data.

The delay processor (not shown) delays the start of data transfer from the buffer 11 to the host computer 2 by a period of time shorter than the command response timeout time in the host computer 2, as will be described later. The delay processor includes a timer (measurer) (not shown) for measuring the elapsed time taken by the controller 5 to transfer archive/backup data recorded on the tape library device 7 to the buffer 11, and a calculator (not shown) for calculating the delay time by performing a difference calculation, i.e., subtracting the elapsed time measured by the timer from a preset adjustment time. The calculator (not shown) may also finely adjust the delay time by, e.g., performing the difference calculation using a value obtained by multiplying the elapsed time by a fixed number according to the time taken for the magnetic tape 14 in the tape slot 15 to move to the tape drive 16, or the time taken to find the relevant spot on the magnetic tape 14.

The controller 5 may also move the magnetic tape 14 to the position where archive/backup data has been recorded, based on the address contained in a data read request sent from the host computer 2, and read/write data from/to the magnetic tape 14.

The buffer 11 may be provided inside the controller 5 as shown in Fig. 1, or may be provided outside the controller 5.

As shown in Figs. 1 and 2, the host computer 2 recognizes the virtual disk library apparatus 3 as plural logical volumes VOL virtualized (emulated) as virtual drives by the controller 5. In other words, the virtual disk library apparatus 3 includes virtual drive devices that record archive/backup data in units of logical volumes VOL, and the controller 5 transfers, in units of logical volumes VOL, the archive/backup data recorded in the virtual drive devices.

The controller 5 also transfers archive/backup data recorded in units of logical volumes VOL to the magnetic disk device 6A. In this embodiment, the controller 5 transfers the archive/backup data recorded on the head portion of a logical volume VOL configured in the tape library device 7 to the magnetic disk device 6A. In other words, the controller 5 makes archive/backup data reside in the magnetic disk device 6A having a higher data access speed than that of the tape library device 7.

The management terminal 4 is a terminal device for maintaining and managing the virtual disk library apparatus 3. The management terminal 4 is a microcomputer system having information processing resources such as memory and CPU, not shown in the figures. The memory is used for maintaining various control programs and tables, and also used as work memory for the CPU. The management terminal 4 executes various types of processing by having the CPU execute the control programs stored in the memory.

(2) Data Write/Read Processing Function in the Archive/Backup System

(2-1) Various Table Configurations

Next, the data write/read processing function adopted in this archive/backup system 1 will be described.

The feature of the archive/backup system 1 according to the embodiment is a data write/read processing function with which command response timeout occurring until data transfer from the virtual disk library apparatus 3 to the host computer 2 starts can be prevented.

As means for performing various types of processing relating to the data write/read processing function, the memory 12 in the controller 5 stores a volume status management table 20, disk storage information table 21, and tape storage information table 22.

The volume status management table 20 is a table for managing the status of each logical volume VOL in the virtual disk library apparatus 3, and contains, as shown in Fig. 3, a volume number field 20A, volume status field 20B, disk storage information field 20C, and tape storage information field 20D.

The volume number field 20A stores a volume ID provided to a corresponding logical volume VOL. The volume status field 20B corresponding to each logical volume VOL to stores "valid" or "invalid" to indicate the logical volume VOL status, i.e., whether or not data in the relevant logical volume VOL is allocated to the magnetic disk device 6A or magnetic tape 14. "Valid" is stored if the data in the logical volume VOL is already allocated to an area in the magnetic disk device 6A or magnetic tape 14, and "invalid" is stored if the data is allocated to neither of them. The disk storage information field 20C stores the location of specific information for data in the magnetic disk device 6A. The tape storage information field 20D stores the location of specific information for data in the tape library device 7.

In the example in Fig. 3, the table shows "volume 1" to "volume 3" as the logical volume VOL number IDs. The volume status of the logical volume VOL with the ID of "volume 1" is "valid," data in the volume is already allocated to an area in the magnetic disk device 6A, and the specific information concerning the data in the magnetic disk device 6A and that in the tape library device 7 are stored respectively in table 1 in the later-described disk storage information table 21, and in table 1 in the later-described tape storage information table 22.

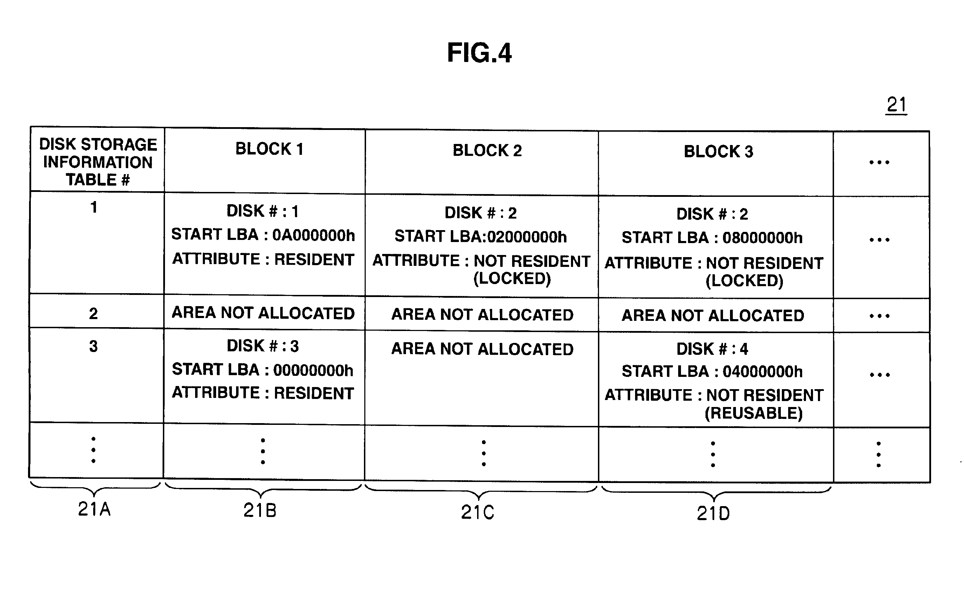

The disk storage information table 21 is a table for managing specific information concerning the information stored in the magnetic disk device 6A. As shown in Fig. 4, the disk storage information table 21 contains a disk storage information table number field 21A, block 1 field 21 B, block 2 field 21C, and block 3 field 21 D.

The disk storage information table number field 21A stores an ID provided to a relevant table number. Each of the block 1 field 21 B, block 2 field 21C, and block 3 field 21 D stores a disk ID to which information is allocated, an LBA from which information allocation is started, and data attribute information. However, if data has not been allocated to any area, "Area Not Allocated" is stored in the entries instead of the data attribute information.

The example in Fig. 4 shows that in the table with table number 1, information in block 1 is allocated to disk 1, data area allocation starts from LBA: 0A000000h in the logical block in disk 1, and the data attribute information is "resident." Being resident means that the data is maintained in the allocated magnetic disk device 6A. The table also shows that the information in block 2 is allocated to disk 2, data area allocation starts from LBA: 02000000h in the logical block in disk 2, and the data attribute information is "not resident (locked)." Being "not resident (locked)" means that the data is allocated to the magnetic disk device 6A but reuse of the relevant area is prevented.

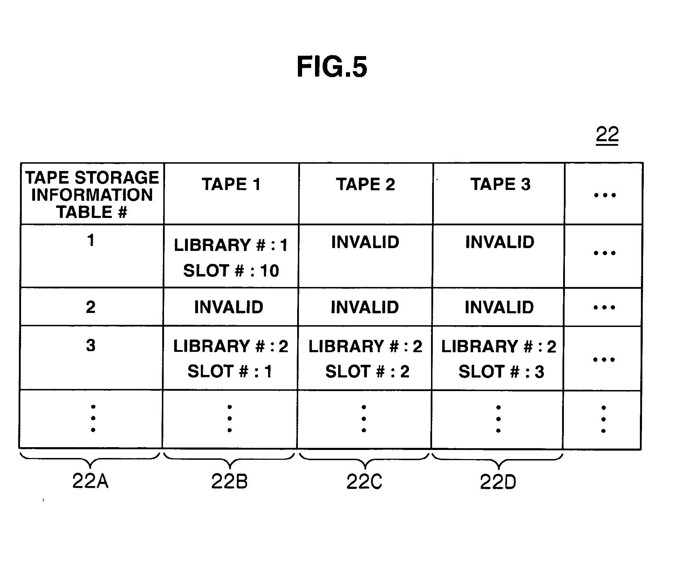

The tape storage information table 22 is a table for managing specific information concerning the information stored in the tape library device 7. As shown in Fig. 5, this tape storage information table 22A contains a tape storage information table number field 22A, table 1 field 22B, tape 2 field 22C, and tape 3 field 22D.

The tape storage information table number field 22A stores an ID provided to a relevant table number. The tape 1 field 22B, tape 2 field 22C, and tape 3 field 22D respectively store the tape library and tape slot IDs to which the tape information is allocated. If the data area is not yet allocated, "invalid" is stored instead of the above information.

The example in Fig. 5 shows that in the table with table number 1, information on the tape 1 is allocated to the slot 10 in the tape library device 7 with tape library ID 1. The table also shows that any area is not yet allocated to information in the tapes 2 and 3, so the information is invalid.

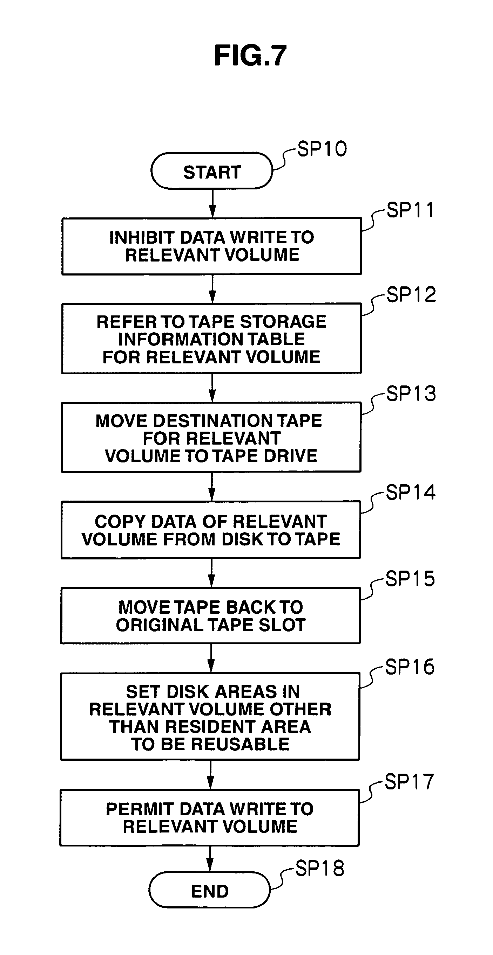

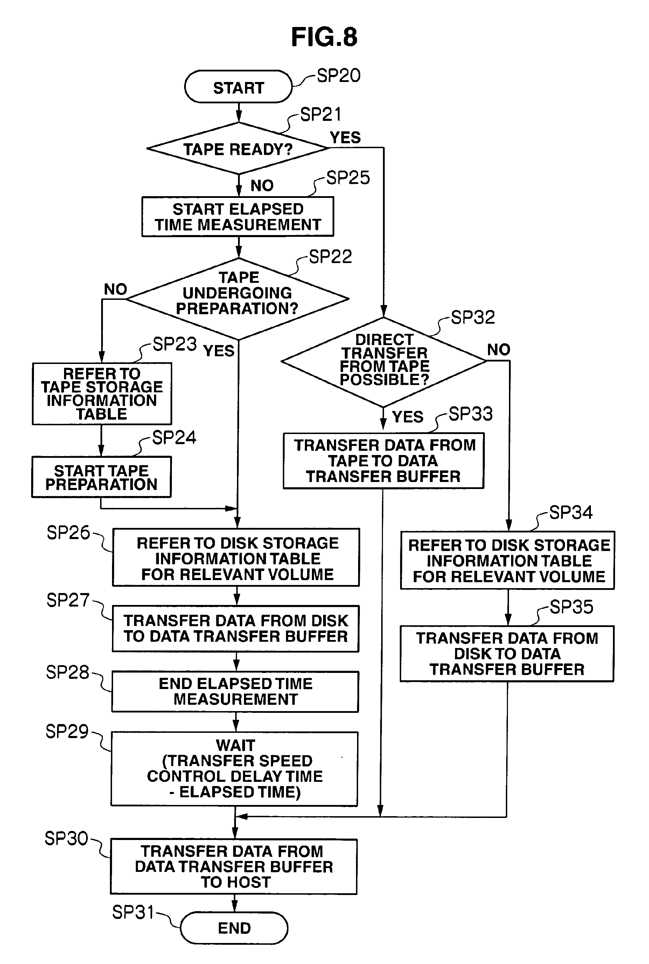

(2-2) Data Write/Read Processing Function Next, the data write/read processing in the archive/backup system 1 in this embodiment will be described with reference to Figs. 6 and 7. Figs. 6 and 7 are the flowcharts showing the data write processing sequences in the archive/backup system 1. Fig. 8 is a flowchart showing a data read processing sequenced in the archive/backup system 1.

As shown in Fig.6, when the host computer 2 starts data write to the virtual disk library apparatus 3 (SP1), the host computer 2 sends data to the buffer 11 in the controller 5 in the virtual disk library apparatus 3 (SP2). The virtual disk library apparatus 3 responds data write completion when finishing data transfer to the buffer 11.

The CPU 10 in the controller 5 in the virtual disk library apparatus 3 refers to the disk storage information table 21 regarding the data written in units of logical volumes VOL (SP3) and checks whether or not the data is allocated to the magnetic disk device 6A.

If data is not allocated to the magnetic disk device 6A (SP4: NO), the CPU 10 allocates a disk area from unused or reusable disk areas in the magnetic disk device 6A to the data (SP7). The CPU 10, after finishing the allocation, updates information about the relevant logical volume VOL in the disk storage information table 21 (SP8).

Meanwhile, if the data is already allocated to the magnetic disk device 6A (SP4: YES), or of the information in the disk storage information table 21 is updated in step SP8, the CPU 10 writes the data from the buffer 11 to the magnetic disk device 6A (SP5), and ends the processing for data write to the magnetic disk device 6A (SP6). Here, the CPU 10 writes the data transferred to the buffer 11 to the magnetic disk device 6A separately.

The CPU 10 also orders that the data written to the magnetic disk device 6A be copied from the host computer 2 or the management terminal 4 to the magnetic tape 14 upon completion of data update to the logical volume VOL. That order triggers the virtual disk library apparatus 3 to start to copy the data in the logical volume VOL from the magnetic disk device 6A to the magnetic tape 14.

As shown in Fig. 7, when data write to the tape library device 7 is started (SP10), the CPU 10 inhibits data write to the logical volume VOL (SP11). The CPU 10 also refers to the tape storage information table 22 regarding the logical volume VOL and moves the magnetic tape 14 the data in the logical volume VOL is to be stored on to the tape drive 16 (SP12).

The CPU 10 copies the data in the logical volume VOL from the magnetic disk device 6A to the magnetic tape 14 (SP14). The CPU 10, after finishing the copy in step SP14, moves the magnetic tape 14 to the original tape slot 15 (SP15). The CPU 10 makes the head portion of the data reside, as a cache, in an area for the relevant logical volume VOL in the magnetic disk device 6A. After finishing data copy from the magnetic disk device 6A to the magnetic tape 14, the disk area for the logical volume VOL, setting aside the disk areas storing the data to be resident, is made reusable, i.e., the disk area is released to make it available for recording data in other logical volumes VOL (SP16). The CPU 10 makes data write to the relevant logical volume VOL possible (SP17), and ends the data write processing (SP18).

In the above described processing, the CPU 10 sets the "cache capacity" for data to be resident per logical volume VOL to a value obtained by dividing the magnetic tape 14 ready-waiting cache data transfer continuation time by the transfer speed limitation delay time and multiplying the result by the host computer 2 read request maximum data length per command. That value is expressed by the following formula:

(Formula 1)

Cache Capacity per Logical Volume VOL = Magnetic Tape Ready-Waiting Cache Data Transfer Continuation time / Transfer Speed Limitation Delay Time

x Host Computer Read Request Maximum Data Length per Command

...(1)

The value for the cache data transfer continuation time, being the waiting time until the magnetic tape 14 is ready, is prepared in advance to match the tape library device 7 connected to the virtual disk library apparatus 3. For example, if the magnetic tape 14 ready-waiting cache data transfer continuation time is 5 minutes, the transfer speed limitation delay time is 10 seconds and the host computer 2 read request maximum data length per command is 256 KB, the cache capacity per volume is 7.5 MB.

As described above, data can be transferred from the disk device 6A to the host computer 2 even until the host computer 2 becomes able to read data in the magnetic tape 14 by making in advance the head data of each logical volume VOL reside as a cache in a residence area in the magnetic disk device 6A. By doing so, command response timeout occurring in the host computer 2 while waiting for data transfer start from the magnetic tape 14 to the host computer 2 can be prevented. When reading of data in the magnetic tape 14 is enabled, the CPU 10 cancels the data transfer speed limitation and transfers data to the host computer 2 at the maximum transfer speed.

Next, the data read processing will be described with reference to Fig. 8. The host computer 2 sends, to the virtual disk library apparatus 3, a data read request containing information about a desired archive/backup data recorded portion. The CPU 10 in the controller 5, after receiving the data read request, starts the data read processing described below.

The CPU 10 checks whether or not the magnetic tape 14 is ready (SP21). If the magnetic tape 14 is ready (SP21: YES) and data can be directly transferred from the magnetic tape 14 (SP32: YES), the CPU 10 transfers (moves or copies) data from the magnetic tape 14 to the buffer 11 at the maximum transfer speed (SP33).

Meanwhile, if data cannot be directly transferred from the magnetic tape 14 (SP32: NO), the CPU 10 refers to the disk storage information table 21 regarding the relevant logical volume VOL (SP34) and transfers data from the magnetic disk device 6A to the buffer 11 (SP35). After finishing step SP33 or SP35, the CPU 10 transfers the data held by the buffer 11 to the host computer 2 (SP30). The data read processing ends here (SP31).

Meanwhile, if the magnetic tape 14 is not yet ready (SP21: NO) and the preparation for the magnetic tape 14 is not being performed in step SP22 (SP22: NO), the CPU 10 refers to the tape storage information table 22 regarding the relevant logical volume VOL (SP23) and starts preparation for the magnetic tape 14 (SP24). Meanwhile, if the magnetic tape 14 is not yet ready in step SP21 (SP21: NO), the CPU 10 starts to measure the elapsed time (SP25).

Subsequently, the CPU 10 refers to the disk storage information table 21 regarding the relevant volume VOL (SP26) and transfers data from the magnetic disk device 6A to the buffer 11 (SP27). The CPU 10, after finishing data transfer, ends the elapsed time measurement (SP28). During data transfer from the magnetic disk device 6A to the host computer 2, the CPU 10, after receiving a command from the host computer 2, performs a difference calculation by subtracting the elapsed time from the transfer speed limitation delay time, and delays data transfer by the time (wait time) acquired by the difference calculation (SP29). By doing so, the data transfer speed is limited to be low.

More specifically, the CPU 10 calculates and determines the "transfer speed limitation delay time" with the following formula:

(Formula 2)

Transfer Speed Limitation Delay Time = Host Command Response Timeout Time

- (Host Computer Read Request Maximum Data Length Per Command

/ Host Computer - Virtual Disk Library Device Maximum Transfer Speed x

Transfer Margin Coefficient) ... (2)

The transfer speed limitation delay time is set by subtracting, from the host command response timeout time, the time necessary for data transfer between the buffer 11 and the host computer 2. The time necessary for data transfer between the buffer 11 and the host computer 2 is set by dividing the host computer 2 read request maximum data length per command by the maximum transfer speed between the host computer 2 and the virtual disk library apparatus 3, then multiplying the result by the transfer margin coefficient. The transfer margin coefficient is a value used for adjustment for accurately measuring the transfer speed limitation delay time.

The host command response timeout time, host computer 2 read request maximum data length per command, and transfer margin coefficient in the virtual disk library apparatus 3 can be changed from their default values from the management terminal 4 when necessary for each host computer 2. The maximum transfer speed (link speed, etc.) adjusted between the host computer 2 and the virtual disk library apparatus 3 is used as the host computer 2 - virtual disk library apparatus 3 maximum transfer speed.

For example, given a host command response timeout time of 15 seconds, a host computer 2 read request maximum data length per command of 256 KB, a host computer 2 - virtual disk library apparatus 3 maximum transfer speed of 1024 KB/second, and a transfer margin coefficient of 4, the transfer speed limitation delay time is 14 seconds.

After the lapse of that delay time, the CPU 10 transfers the data held by the buffer 11 to the host computer 2 (SP30), and the data read processing ends (SP31). Meanwhile, if data transfer from the magnetic disk device 6A to the buffer 11 did not end within the transfer speed limitation delay time, or if reading of the data in the magnetic tape 14 is not enabled even after transferring all data in the magnetic disk device 6A, the CPU 10 responds a status other than "normal" to the host computer 2.

As described above, the controller 5 according to this embodiment can continue data transfer, delaying data transfer to the host computer 2 at the magnetic disk device 6A in which the head data in the logical volume VOL is made to reside as a cache until reading of data in the magnetic tape 14 is enabled. Accordingly, the virtual disk library apparatus 3 can read data in all logical volume(s) VOL(s) without holding the cache capacity (several dozen TB) necessary when the controller 5 transfers data to the host computer 2, until reading of data in an arbitrary logical volume requested by the host computer 2 is enabled.

The virtual disk library apparatus 3 stores several hundreds or several thousands of logical volumes VOL. Therefore, a huge capacity is necessary if data for enabling continuing data transfer is cached in the magnetic disk device 6A in the virtual disk library apparatus 3 until reading of data in the magnetic tape 14 for all logical volume VOL is enabled. Given a data transfer speed between the host computer 2 and the virtual disk library apparatus 3 of 100 MB/s, time for continuing data transfer at a cache of 5 minutes, and 1000 volumes in the virtual disk library apparatus, the necessary cache capacity can reach as much as 30 TB.

As an example of numerical values, given a host computer 2 command response timeout time of 15 seconds, a virtual disk library apparatus 3 transfer speed limitation delay time (adjustment time) of 10 seconds, a magnetic disk device 6A data transfer continuation time of 300 seconds,1000 logical volumes VOL recorded on the virtual disk library apparatus 3, and a host computer 2 read request data length of 256 KB in the archive/backup system 1 according to this embodiment, the necessary cache capacity in the magnetic disk device 6A is about 10 GB. In this way, the above described cache capacity is greatly reduced.

The time taken to transfer data between the buffer 11 and the host computer 2 is relatively short (several milliseconds to several dozen milliseconds), so the virtual disk library apparatus 3 can transfer data to the host computer 2 within the host computer 2 command response timeout time. More specifically, the CPU 10 waits for a shorter period of time than the host computer 2 command response timeout time before transferring data to the host computer 2, until reading of data in the magnetic tape 14 is enabled, thus limiting the data transfer speed to a low speed.

As described above, given a data transfer continuation time at the cache of 5 minutes, 1000 logical volumes VOL in the virtual disk library apparatus 3, and a host computer 2 read request data length of 256 KB in a system in which the host computer 2 command response timeout time is 15 seconds and the virtual disk library apparatus 3 transfer speed limitation delay time is 10 seconds, the required cache capacity is about 10 GB. Thus the cache capacity can be greatly reduced. If reading of data in the magnetic tape 14 is enabled, the data transfer speed limitation is cancelled and data is transferred at the maximum transfer speed (= without waiting time after data transmission to the buffer 11 has finished).

In summary, in the data transfer method in this embodiment, the virtual disk library apparatus 3 transfers archive/ backup data recorded on the tape library device 7 to the buffer 11 (buffer transfer step), receives a data read request from the host computer 2 (read request reception step), delays start of data transfer from the buffer 11 to the host computer 2 by a shorter period of time than the host computer 2 command response timeout time (delay step), and transfers the transfer-delayed data to the buffer 11 (transfer step).

In the delay step, the virtual disk library apparatus 3 measures the elapsed time taken to transfer archive/ backup data recorded on the tape library device 7 or the magnetic disk device 6A to the buffer 11 (measurement step), and calculates the delay time by performing a difference calculation, i.e., subtracting the measured elapsed time from adjustment time as a preset transfer speed limitation delay time of the elapsed time measured from adjustment time as preset transfer speed limitation delay time (delay time calculation step).

(3) Advantage of this Embodiment

The command response timeout occurring in the host computer until the virtual disk library apparatus 3 starts data transfer can be prevented without installing any application software dedicated for the virtual disk library apparatus 3 in the host computer 2.

Also, because data in units of logical volumes VOL is transferred between the magnetic disk device 6A and the virtual disk library apparatus 3, the virtual disk library apparatus 3 can continue the data transfer, limiting the effective data transfer speed to a low speed, while the magnetic disk device 6A is transferring data to the host computer 2. The delay processor in the controller 5 controls the transfer speed. Therefore, the controller 5 can reduce the cache capacity necessary for the virtual disk library apparatus 3 by limiting the data transfer speed.

The storage apparatus, storage system, and data read method are not limited to the above described embodiment, and various modifications may of course be added without departing from the scope of the invention.

(4) Other Embodiments

In the above described embodiment, archive/backup data is transferred. However, the invention is not limited to that and any data may be transferred.

In the above embodiment, the buffer 11 is used as a device for storing data. However, the invention is not limited to that and various types of memory may be used instead of the buffer 11.

In the above embodiment, the magnetic disk device 6, tape library device 7, and virtual disk library apparatus 3 are used as storage devices. However, the invention is not limited to that and other types of storage device may also be used.

Industrial Applicability

The invention can be applied widely to archive/backup systems having various configurations. According to the storage apparatus, storage system, and data read method in the invention, a large volume of data, the access frequency of which has been decreased, can be stored inexpensively in a hierarchical archive/backup system.

**Claims**

1. A storage apparatus comprising:

   a first storage device for storing and reading data: and
   a second storage device having a lower data read speed than that of the first storage device,

wherein the first storage device maintains a head portion of data and transmits the maintained data to a host computer, and

the second storage device maintains the entire data and transmits data subsequent to its head portion to the host computer.

2. The storage apparatus according to claim 1, wherein the first storage device includes a measurement unit for calculating a data transmission speed, and delays data transmission to the host computer by using the measurement unit.

3. The storage apparatus according to claim 1 or claim 2, wherein the first storage device copies the entire data to the second storage apparatus, maintains a head portion of the data stored in units of logical volumes, and releases the area that has stored the data other than the head portion.

4. A storage system comprising:

   a first storage device for storing and reading data; and
   a second storage device having a lower data read speed than that in the first storage device,

   wherein the first storage device has means for maintaining a head portion of data and transmitting the maintained data to a host computer, and
   the second storage device has means for maintaining the entire data and transmitting data subsequent to its head portion to the host computer.

5. The storage system according to claim 4, wherein the first storage device includes a measurement unit for calculating a data transmission speed and means for delaying the data transmission to the host computer by using the measurement unit.

6. The storage system according to claim 4 or claim 5, wherein the first storage device has means for copying the entire data to the second storage device, maintaining a head portion of the data stored in units of logical volume(s), and releasing the area that has stored the data other than the head portion.

7. A data read method for a storage apparatus that reads data in response to a data output request given from a host computer, the storage apparatus including a first storage device for storing and reading data and a second storage device having a lower data read speed than that of the first storage device, the method comprising:

   a first step for maintaining a head portion of data and transmitting the maintained data to a host computer under the control of the first storage device; and
   a second step of maintaining the entire data and transmitting data subsequent to its head portion to the host computer under the control of the second storage device.

8. The data read method according to claim 7, wherein the first storage device includes a measurement unit for calculating a data transmission speed, and the first step includes delaying data transmission to the host computer by using the measurement unit.

9. The data read method according to claim 7 or claim 8, wherein the first step also includes copying, under the control of the first storage device, the entire data to the second storage device, maintaining the head portion of data stored in units of logical volumes, releasing the area that has stored the data other than the head portion, and transmitting the maintained data to the host computer.

# FIG.1

**HOST** ~2

3

**CONTROLLER** 5~

10~ **CPU**

**MEMORY** ~12

**VOLUME STATUS MANAGEMENT TABLE** ~20

**DISK STORAGE INFORMATION TABLE** ~21

**TAPE STORAGE INFORMATION TABLE** ~22

11~ **DATA TRANSFER BUFFER**

4

**MANAGEMENT TERMINAL**

6A~ **DATA CACHE DISK DEVICE**

~14
~15
~16

7~ **TAPE LIBRARY DEVICE**

**VIRTUAL DISK LIBRARY APPARATUS**

# FIG.2

HOST

DATA TRANSFER IN VOLUMES

6B

VOL

DISK DEVICE

VIRTUAL DISK LIBRARY APPARATUS

VOL

3

1

2

HIGH　　ACCESS FREQUENCY　　LOW

FAST　DATA ACCESS PERFORMANCE　SLOW

# FIG.3

<u>20</u>

| VOLUME # | VOLUME STATUS | DISK STORAGE INFORMATION | TAPE STORAGE INFORMATION | ... |
|---|---|---|---|---|
| 1 | VALID | DISK STORAGE INFORMATION TABLE 1 | TAPE STORAGE INFORMATION TABLE 1 | ... |
| 2 | INVALID | DISK STORAGE INFORMATION TABLE 2 | TAPE STORAGE INFORMATION TABLE 2 | ... |
| 3 | VALID | DISK STORAGE INFORMATION TABLE 3 | TAPE STORAGE INFORMATION TABLE 3 | ... |
| ⋮ | ⋮ | ⋮ | ⋮ | ⋮ |

20A    20B    20C    20D

## FIG.4

_21_

| DISK STORAGE INFORMATION TABLE # | BLOCK 1 | BLOCK 2 | BLOCK 3 | ... |
|---|---|---|---|---|
| 1 | DISK # : 1<br>START LBA : 0A000000h<br>ATTRIBUTE : RESIDENT | DISK # : 2<br>START LBA:02000000h<br>ATTRIBUTE : NOT RESIDENT (LOCKED) | DISK # : 2<br>START LBA : 08000000h<br>ATTRIBUTE : NOT RESIDENT (LOCKED) | ... |
| 2 | AREA NOT ALLOCATED | AREA NOT ALLOCATED | AREA NOT ALLOCATED | ... |
| 3 | DISK # : 3<br>START LBA : 00000000h<br>ATTRIBUTE : RESIDENT | AREA NOT ALLOCATED | DISK # : 4<br>START LBA : 04000000h<br>ATTRIBUTE : NOT RESIDENT (REUSABLE) | ... |
| ... | ... | ... | ... | ... |

21A   21B   21C   21D

# FIG.5

22

| TAPE STORAGE INFORMATION TABLE # | TAPE 1 | TAPE 2 | TAPE 3 | ... |
|---|---|---|---|---|
| 1 | LIBRARY # : 1<br>SLOT # : 10 | INVALID | INVALID | ... |
| 2 | INVALID | INVALID | INVALID | ... |
| 3 | LIBRARY # : 2<br>SLOT # : 1 | LIBRARY # : 2<br>SLOT # : 2 | LIBRARY # : 2<br>SLOT # : 3 | ... |
| ⋮ | ⋮ | ⋮ | ⋮ | ⋮ |

22A 22B 22C 22D

# FIG.6

START — SP1

TRANSFER DATA FROM
HOST TO DATA
TRANSFER BUFFER — SP2

REFER TO DISK STORAGE
INFORMATION TABLE
FOR RELEVANT VOLUME — SP3

DISK AREA
ALREADY
ALLOCATED? — SP4

NO

YES

ALLOCATE DISK AREA
FROM UNUSED AREA
OR REUSABLE AREA — SP7

WRITE DATA FROM
DATA TRANSFER
BUFFER TO DISK — SP5

UPDATE DISK STORAGE
INFORMATION TABLE
FOR RELEVANT VOLUME — SP8

END — SP6

# FIG.7

START — SP10

INHIBIT DATA WRITE TO
RELEVANT VOLUME — SP11

REFER TO TAPE STORAGE
INFORMATION TABLE
FOR RELEVANT VOLUME — SP12

MOVE DESTINATION TAPE
FOR RELEVANT
VOLUME TO TAPE DRIVE — SP13

COPY DATA OF RELEVANT
VOLUME FROM DISK TO TAPE — SP14

MOVE TAPE BACK TO
ORIGINAL TAPE SLOT — SP15

SET DISK AREAS IN
RELEVANT VOLUME OTHER
THAN RESIDENT AREA
TO BE REUSABLE — SP16

PERMIT DATA WRITE TO
RELEVANT VOLUME — SP17

END — SP18

# FIG.8

START — SP20

SP21
TAPE READY? — YES

NO — SP25

START ELAPSED
TIME MEASUREMENT

SP22
TAPE
UNDERGOING
PREPARATION?

NO

SP23 — YES

REFER TO
TAPE STORAGE
INFORMATION
TABLE

SP24

START TAPE
PREPARATION

SP32
DIRECT
TRANSFER
FROM TAPE
POSSIBLE? — NO

YES — SP33

TRANSFER DATA FROM
TAPE TO DATA
TRANSFER BUFFER

SP26 — REFER TO DISK STORAGE
INFORMATION TABLE
FOR RELEVANT VOLUME

SP27 — TRANSFER DATA FROM DISK
TO DATA TRANSFER BUFFER

SP28 — END ELAPSED TIME
MEASUREMENT

SP29 — WAIT
(TRANSFER SPEED
CONTROL DELAY TIME
- ELAPSED TIME)

SP34
REFER TO DISK STORAGE
INFORMATION TABLE
FOR RELEVANT VOLUME

SP35
TRANSFER DATA FROM
DISK TO DATA
TRANSFER BUFFER

SP30 — TRANSFER DATA FROM
DATA TRANSFER BUFFER
TO HOST

SP31 — END

**EP 1 909 168 A2**

**REFERENCES CITED IN THE DESCRIPTION**

**Patent documents cited in the description**

- JP 2006261246 A

- JP 11242570 A